# EUROPEAN PATENT SPECIFICATION

(11) **EP 3 656 816 B1**
(45) Date of publication and mention of the grant of the patent: **07.04.2021**
(21) Application number: 18835633.1
(22) Date of filing: 20.07.2018
(51) Int. Cl.: C08L 51/04, B32B 27/20, B32B 27/30, C08F 279/02, C08L 25/12, C25D 5/56

(54) **THERMOPLASTIC RESIN COMPOSITION FOR COATING, RESIN MOLDED ARTICLE, AND COATED ARTICLE**
THERMOPLASTISCHE HARZZUSAMMENSETZUNG ZUR BESCHICHTUNG, HARZFORMARTIKEL UND BESCHICHTETER ARTIKEL
COMPOSITION DE RÉSINE THERMOPLASTIQUE POUR REVÊTEMENT, ARTICLE MOULÉ EN RÉSINE ET ARTICLE REVÊTU

(30) Priority: 21.07.2017 JP 2017141655
(43) Date of publication of application: 27.05.2020
(73) Proprietor: Techno-UMG Co., Ltd., Tokyo 105-0021 (JP)
(72) Inventor: YAMASHITA Shinji, Ube-shi Yamaguchi 755-8580 (JP); SAKAI Hiroshi, Ube-shi Yamaguchi 755-8580 (JP); FUKUMOTO Kotaro, Ube-shi Yamaguchi 755-8580 (JP)
(74) Representative: Lavoix
(86) International application number: PCT/JP2018/027291
(87) International publication number: WO 2019/017476

(56) References cited:
- FR-A1- 2 268 835
- JP-A- 2002 338 636
- JP-A- 2011 236 263
- JP-A- 2017 502 106

## Description

### TECHNICAL FIELD

The present invention relates to a thermoplastic resin composition for coating, a resin molded article, and a coated article.

Priority is claimed on Japanese Patent Application No. 2017-141655, filed on July 21, 2017, the content of which is incorporated herein by reference.

### BACKGROUND ART

A molded article including ABS resin has excellent impact resistance, mechanical strength, and chemical resistance, and thus is used in a wide range of fields such as office automation (OA) equipment, data communication equipment, an electronic and electric apparatus, a home electric appliance, a motor vehicle, and construction. In addition, when the molded article including ABS resin is subjected to a coating treatment to obtain a coated article, it has characteristics that it is excellent in coating appearance, has high adhesion strength of a coating film, and further is excellent in a thermal cycle characteristic. Therefore, the molded article including ABS resin is also used for a wide variety of applications in plastic coating applications. For example, in the field of the motor vehicle, use and development for coating a radiator grill part, an emblem part, and the like are attempted.

The coating characteristics are easily influenced by factors such as characteristics of a resin composition forming the molded article or molding conditions. Therefore, even in a case where a resin composition containing ABS resin is used, there is a possibility that a coating appearance defect may occur. In a case where the molding conditions are poor, an appearance defect such as peeling or floating of a coating film occurs and a commercial value of a final product is significantly impaired.

In such a situation, as a thermoplastic resin composition in which a coating film has a high adhesion strength and even in a thermal cycle, no swelling, a crack, or the like in the coating film occurs, there is a proposed a thermoplastic resin composition including a predetermined copolymer, a graft copolymer, and an organosilicon compound in a predetermined ratio (Patent Document 1).

### Citation List

### Patent Literature

[Patent Document 1] Japanese Unexamined Patent Application, First Publication No. H8-193162

### DISCLOSURE OF INVENTION

### Technical Problem

In recent years, a production system is aimed to be more efficient according to multi-product and small-sized production, and a molding cycle of a molded article is shortened and production is performed under high-speed molding conditions.

However, in a case where the thermoplastic resin composition of Patent Document 1 is molded under high-speed molding conditions, when the obtained molded article is subjected to a coating treatment, sufficient coating adhesion strength is not exhibited, and peeling or floating of the coating film is likely to occur in a thermal cycle test. In addition, impact resistance of the molded article or fluidity during a molding process is not always sufficient.

An object of the present invention is to provide a thermoplastic resin composition for coating, in which excellent coating adhesion strength can be exhibited even when high-speed molding is performed, a coating appearance hardly changes in a thermal cycle, a resin molded article excellent in impact resistance is obtained, and fluidity during a molding process is also excellent, and a resin molded article and a coated article using the same.

### Solution to Problem

The present invention includes the following aspects.
[1] A thermoplastic resin composition for coating, including: a rubber-containing graft copolymer mixture (A) including two or more kinds of rubber-containing graft copolymers obtained by copolymerizing a monomer mixture containing an aromatic vinyl compound and a vinyl cyanide compound in presence of a diene rubbery polymer; and a rigid copolymer (B) including a monomer unit derived from an aromatic vinyl compound and a monomer unit derived from a vinyl cyanide compound,
   in which the rubber-containing graft copolymer mixture (A) includes a rubber-containing graft copolymer (A-I) in which a mass average particle size of the diene rubbery polymer is 0.15 µm or larger and smaller than 0.25 µm and a proportion of particles having particle sizes of larger than 0.122 µm and 0.243 µm or smaller in all particles of the diene rubbery polymer is 50% by mass or more, and a rubber-containing graft copolymer (A-II) in which a mass average particle size of the diene rubbery polymer is 0.25 µm or larger and 0.5 µm or smaller,
   an amount of the rubber-containing graft copolymer (A-I) is 60% by mass or more and less than 95% by mass, relative to a total mass of the rubber-containing graft copolymer mixture (A), and
   when a total mass of the rubber-containing graft copolymer mixture (A) and the rigid copolymer (B) is set as 100 parts by mass, an amount of the rubber-containing graft copolymer mixture (A) is 25 parts by mass or more and 50 parts by mass or less, and an amount of the rigid copolymer (B) is 50 parts by mass or more and 75 parts by mass or less.
[2] In the thermoplastic resin composition for coating according to [1], the rigid copolymer (B) includes a rigid copolymer (B-I) in which a mass average molecular weight is 50,000 or more and 80,000 or less and an amount of the monomer unit derived from a vinyl cyanide compound is 30% by mass or more and 35% by mass or less, relative to a total mass of the rigid copolymer.
[3] A resin molded article including the thermoplastic resin composition for coating according to [1] or [2].
[4] A coated article including: the resin molded article according to [3]; and a coating film formed on at least a part of a surface of the resin molded article.

### Advantageous Effects of Invention

According to the present invention, it is possible to provide a thermoplastic resin composition for coating, in which excellent coating adhesion strength can be exhibited even when high-speed molding is performed, a coating appearance hardly changes in a thermal cycle, a resin molded article excellent in impact resistance is obtained, and fluidity during a molding process is also excellent, and a resin molded article and a coated article using the same.

### BEST MODE FOR CARRYING OUT THE INVENTION

Hereinafter, the present invention will be described in detail.

### [Thermoplastic resin composition for coating]

A thermoplastic resin composition for coating of the present invention includes a rubber-containing graft copolymer mixture (A) and a rigid copolymer (B).

The thermoplastic resin composition for coating of the present invention may further include another component other than the rubber-containing graft copolymer mixture (A) and the rigid copolymer (B) as needed, within a range not impairing an effect of the present invention.

### <Rubber-containing graft copolymer mixture (A)>

The rubber-containing graft copolymer mixture (A) includes two or more kinds of rubber-containing graft copolymers.

Each of the two or more kinds of the rubber-containing graft copolymers forming the rubber-containing graft copolymer mixture (A) is a copolymer obtained by copolymerizing a monomer mixture containing an aromatic vinyl compound and a vinyl cyanide compound in presence of a diene rubbery polymer. That is, the rubber-containing graft copolymer contains a rigid copolymer component (A') obtained by graft polymerization of the aromatic vinyl compound and the vinyl cyanide compound to the diene rubbery polymer. The rubber-containing graft copolymer may further include an aromatic vinyl compound homopolymer, a vinyl cyanide compound homopolymer, and a copolymer of an aromatic vinyl compound and a vinyl cyanide compound, in addition to the rigid copolymer component (A').

The monomer mixture may further include a copolymerizable compound other than the aromatic vinyl compound and the vinyl cyanide compound, as needed. That is, the rubber-containing graft copolymer may be obtained by copolymerizing the aromatic vinyl compound and the vinyl cyanide compound, and the other copolymerizable compound as needed, with the diene rubbery polymer.

The rubber-containing graft copolymer mixture (A) includes at least a rubber-containing graft copolymer (A-I) and a rubber-containing graft copolymer (A-II) as the rubber-containing graft copolymer.

The rubber-containing graft copolymer (A-I) is a rubber-containing graft copolymer in which a mass average particle size of the diene rubbery polymer is 0.15 µm or larger and smaller than 0.25 µm, and a proportion of particles having particle sizes of larger than 0.122 µm and 0.243 µm or smaller in all particles of the diene rubbery polymer is 50% by mass or more. The rubber-containing graft copolymer (A-II) is a rubber-containing graft copolymer in which a mass average particle size of the diene rubbery polymer is 0.25 µm or larger and 0.5 µm or smaller.

In the rubber-containing graft copolymer (A-I), the mass average particle size of the diene rubbery polymer is preferably 0.15 µm or larger and smaller than 0.25 µm, and more preferably 0.18 µm or larger and smaller than 0.23 µm.

When the mass average particle size of the diene rubbery polymer in the rubber-containing graft copolymer (A-I) is within the range, it is possible to prevent any of an adhesion strength characteristic, a thermal cycle characteristic, impact resistance, and fluidity in a coating step from deteriorating.

The mass average particle size is measured by a method described in examples to be described later.

In the rubber-containing graft copolymer (A-I), a proportion of particles having particle sizes of larger than 0.122 µm and 0.243 µm or smaller in all particles of the diene rubbery polymer is 50% by mass or more and preferably 60% by mass or more. When the proportion of the particles in the rubber-containing graft copolymer (A-I) is 50% by mass or more, it is possible to prevent any of an adhesion strength characteristic, a thermal cycle characteristic, impact resistance, and fluidity in a coating step from deteriorating. An upper limit of the proportion of the particles is not particularly limited, and may be 100% by mass.

The proportion of the particles is determined from a mass-based particle size distribution. The mass-based particle size distribution is measured by a method described in examples to be described later.

In the rubber-containing graft copolymer (A-II), a mass average particle size of the diene rubbery polymer is 0.25 µm or larger and 0.50 µm or smaller, and preferably 0.30 µm or larger and 0.40 µm or smaller. When the mass average particle size of the diene rubbery polymer in the rubber-containing graft copolymer (A-II) is within the range, it is possible to prevent any of an adhesion strength characteristic, a thermal cycle characteristic, impact resistance, and fluidity in a coating step from deteriorating.

In the rubber-containing graft copolymer mixture (A), an amount of the rubber-containing graft copolymer (A-I) is 60% by mass or more and less than 95% by mass, and preferably 70% by mass or more and less than 90% by mass, relative to a total mass of the graft copolymer mixture (A). When the amount of the rubber-containing graft copolymer (A-I) is within the range, it is possible to prevent any of an adhesion strength characteristic, a thermal cycle characteristic, impact resistance, and fluidity in a coating step from deteriorating.

In the rubber-containing graft copolymer mixture (A), an amount of the rubber-containing graft copolymer (A-II) is preferably more than 5% by mass and 40% by mass or less, and preferably more than 10% by mass and 30% by mass or less, relative to the total mass of the graft copolymer mixture (A). When the amount of the rubber-containing graft copolymer (A-II) is within the range, it is possible to prevent any of an adhesion strength characteristic, a thermal cycle characteristic, impact resistance, and fluidity in a coating step from deteriorating.

Examples of the diene rubbery polymer, which is a raw material of a rubber-containing graft copolymer (such as the rubber-containing graft copolymers (A-I) and (A-II)) include polybutadiene, a copolymer of butadiene and a vinyl monomer copolymerizable therewith (such as styrene-butadiene and acrylonitrile-butadiene), and polyisoprene. One kind of these diene rubbery polymers may be used alone or a combination of two or more kinds thereof may be used. Among these, the polybutadiene is preferable.

Regarding a diene rubbery polymer, the diene rubbery polymer may be enlarged rubber which was enlarged. In addition, the mass average particle size, distribution, or the like can be adjusted by an enlargement operation. Examples of an enlargement method include a mechanical aggregation method, a chemical aggregation method, and an aggregation method using an acid group-containing copolymer.

Examples of the chemical agglomeration method include a method of adding an acidic substance to latex of a diene rubbery polymer to make emulsion stability unstable and agglomerating to reach a target particle size, and then adding an alkaline substance to make the latex of a diene rubbery polymer stable again. Examples of the acidic substance include acetic acid, acetic anhydride, sulfuric acid, and phosphoric acid. Examples of the alkaline substance include potassium hydroxide and sodium hydroxide.

Examples of the aggregation method using an acid group-containing copolymer include a method of mixing latex of a diene rubbery polymer and latex of an acid group-containing copolymer to obtain latex of an enlarged rubber. Examples of the latex of an acid group-containing copolymer include latex of an acid group-containing copolymer obtained by polymerizing monomer components including an acid group-containing monomer (for example, a monomer containing a carboxyl group such as methacrylic acid and acrylic acid) and a alkyl (meth)acrylate monomer, and another monomer copolymerizable therewith as needed, in water.

Examples of the aromatic vinyl compound, which is a raw material of the rubber-containing graft copolymer, include styrene, α-methylstyrene, vinyltoluenes (such as p-methylstyrene), halogenated styrenes (such as p-bromostyrene and p-chlorostyrene), p-t-butylstyrene, dimethylstyrene, and vinylnaphthalene. One kind of these aromatic vinyl compounds may be used alone or a combination of two or more kinds thereof may be used. Among these, the styrene and the α-methylstyrene are preferable.

Examples of the vinyl cyanide compound which is a raw material of the rubber-containing graft copolymer include acrylonitrile and methacrylonitrile. One kind of these vinyl cyanide compounds may be used alone or a combination of two or more kinds thereof may be used. Among these, the acrylonitrile is preferable.

Examples of the other copolymerizable compound that can be used as a raw material of the rubber-containing graft copolymer include methacrylic acid or acrylic acid esters such as methyl methacrylate and methyl acrylate; maleimide compounds such as N-phenylmaleimide and N-cyclohexylmaleimide; and unsaturated carboxylic acid compounds such as acrylic acid, methacrylic acid, itaconic acid, and fumaric acid. One kind of these compounds may be used alone or a combination of two or more kinds thereof may be used.

The amount of a component derived from the diene rubbery polymer in the rubber-containing graft copolymer is preferably 30% by mass or more and 70% by mass or less, and more preferably 40% by mass or more and 60% by mass or less, relative to the total mass of the rubber-containing graft copolymer. When the amount of the component derived from the diene rubbery polymer in the rubber-containing graft copolymer is within the range, an adhesion strength characteristic, a thermal cycle characteristic, impact resistance, and fluidity in a coating step are more excellent.

The amount of a component derived from the aromatic vinyl compound in the rubber-containing graft copolymer is preferably 18% by mass or more and 60% by mass or less, and more preferably 30% by mass or more and 50% by mass or less, relative to the total mass of the rubber-containing graft copolymer.

When the amount of the component derived from the aromatic vinyl compound in the rubber-containing graft copolymer is within the range, an adhesion strength characteristic, a thermal cycle characteristic, impact resistance, and fluidity in a coating step are more excellent.

The amount of a component derived from the vinyl cyanide compound in the rubber-containing graft copolymer is preferably 4% by mass or more and 25% by mass or less, and more preferably 10% by mass or more and 20% by mass or less, relative to the total mass of the rubber-containing graft copolymer.

When the amount of the component derived from the vinyl cyanide compound in the rubber-containing graft copolymer is within the range, an adhesion strength characteristic, a thermal cycle characteristic, impact resistance, and fluidity in a coating step are more excellent.

The amount of a component derived from the other copolymerizable compound in the rubber-containing graft copolymer is preferably 0% by mass or more and 15% by mass or less, and more preferably 0% by mass or more and 10% by mass or less, relative to the total mass of the rubber-containing graft copolymer.

When the amount of the component derived from the other copolymerizable compound in the rubber-containing graft copolymer is within the range, an adhesion strength characteristic, a thermal cycle characteristic, impact resistance, and fluidity in a coating step are more excellent.

In each of the two or more kinds of the rubber-containing graft copolymers forming the rubber-containing graft copolymer mixture (A), the kind and amount of each component (such as the component derived from the diene rubbery polymer, the component derived from the aromatic vinyl compound, and the component derived from the vinyl cyanide compound) may be the same as or different from each other.

The rubber-containing graft copolymer may be obtained by copolymerizing a monomer mixture containing the aromatic vinyl compound and the vinyl cyanide compound in presence of the diene rubbery polymer.

A method of performing the polymerization is not particularly limited, and emulsion polymerization is preferable since a reaction can be controlled to proceed stably. Specifically, examples thereof include: a method of charging a monomer mixture to a latex of a diene rubbery polymer and then polymerizing; a method in which a part of a monomer mixture is first charged to a latex of a diene rubbery polymer, and the remainder is added dropwise to a polymerization system while performing polymerization as needed; and a method of performing polymerization as needed, while adding the whole amount of a monomer mixture to a latex of a diene rubbery polymer dropwise, and these methods can be separated into and performed in one or more stages. In a case where the methods are separated into and performed in two or more stages, polymerization can also be performed by changing a kind or a composition ratio of the monomers forming the monomer mixture in each stage. The rubber-containing graft copolymer obtained by the emulsion polymerization is in a latex state, in general.

In general, a radical polymerization initiator and an emulsifier are used for the emulsion polymerization.

Examples of the radical polymerization initiator include peroxide, an azo initiator, and a redox initiator combining an oxidizing agent and a reducing agent. Among these, the redox initiator is preferable, and a sulfoxylate initiator obtained by combining ferrous sulfate, ethylenediaminetetraacetic acid disodium salt, sodium formaldehyde sulfoxylate, and hydroperoxide is particularly preferable.

The emulsifier is not particularly limited, and since stability of latex during radical polymerization is excellent and a polymerization rate increases, carboxylates such as sodium sarcosinate, potassium fatty acid, sodium fatty acid, dipotassium alkenyl succinate, and rosin acid soap are preferable. Among these, the dipotassium alkenyl succinate is preferable, since generation of gas can be suppressed when the obtained rubber-containing graft copolymer and a thermoplastic resin composition including the same are molded at a high temperature. Specific examples of the dipotassium alkenyl succinate include dipotassium octadecenyl succinate, dipotassium heptadecenyl succinate, and dipotassium hexadecenyl succinate. One kind of these emulsifiers may be used alone or a combination of two or more kinds thereof may be used.

In addition, when performing the polymerization, in order to control a molecular weight and a graft rate of the rubber-containing graft copolymer to be obtained, various known chain transfer agents may be added.

Regarding a polymerization condition, the polymerization may be performed, for example, for 1 hour or longer and 10 hours or shorter at 30°C or higher and 95°C or lower.

The rubber-containing graft copolymer is obtained in a latex state, in general. Examples of a method of recovering the rubber-containing graft copolymer from the latex of the rubber-containing graft copolymer include: a wet method in which the latex of the graft copolymer is coagulated in a slurry state by putting the latex into hot water in which a coagulant was dissolved; and a spray drying method in which the rubber-containing graft copolymer is semi-directly recovered by spraying the latex of the rubber-containing graft copolymer in heated atmosphere.

Examples of the coagulant used in the wet method include inorganic acid such as sulfuric acid, hydrochloric acid, phosphoric acid, and nitric acid; and metal salt such as calcium chloride, calcium acetate, and aluminum sulfate, and the coagulant is selected according to the emulsifier used in the polymerization. For example, in a case where only the carboxylic acid soap such as a fatty acid soap or a rosin acid soap is used as the emulsifier, one or more of the above-described coagulants can be used. In a case where an emulsifier exhibiting stable emulsifying power even in an acidic region, such as the sodium alkylbenzenesulfonate is used as the emulsifier, the metal salt is suitable as the coagulant.

When using the wet method, a slurry-like rubber-containing graft copolymer is obtained. Examples of a method of obtaining the rubber-containing graft copolymer in a dried state from the slurry-like rubber-containing graft copolymer include a method in which first, the remaining emulsifier residue is eluted into water and washed, then, the slurry is dehydrated by centrifugation, press dehydrator, or the like to dry with a pneumatic conveying dryer; and a method of carrying out the dehydration and the drying at the same time with a squeeze dehydrator, an extruder, or the like. A dried rubber-containing graft copolymer in a form of powder or particulate is obtained by such a method.

A washing condition is not particularly limited, but it is preferable to perform washing in a condition by which an amount of the emulsifier residue contained in 100% by mass of the dried rubber-containing graft copolymer is 2% by mass or less.

Instead of recovering the rubber-containing graft copolymer discharged from a squeeze dehydrator or an extruder, the rubber-containing graft copolymer can be directly sent to an extruder or a molding machine for producing a resin composition to obtain a molded article.

### <Rigid copolymer (B)>

The rigid copolymer (B) is a copolymer including a monomer unit derived from an aromatic vinyl compound and a monomer unit derived from a vinyl cyanide compound. The rigid copolymer (B) may further include another monomer unit derived from a copolymerizable compound other than the aromatic vinyl compound and the vinyl cyanide compound, as needed.

For the aromatic vinyl compound, the vinyl cyanide compound, and the other copolymerizable compound used as needed in the rigid copolymer (B), the same compounds as the compounds exemplified for the rubber-containing graft copolymer mixture (A) can be used respectively, and preferred embodiments are also the same.

A amount of the monomer unit derived from the aromatic vinyl compound in the rigid copolymer (B) is not particularly limited, and is, for example, preferably 50% by mass or more and 85% by mass or less, and more preferably 60% by mass or more and 75% by mass or less, relative to the total mass of the rigid copolymer (B).

When the amount of the monomer unit derived from the aromatic vinyl compound in the rigid copolymer (B) is in the range, an adhesion strength characteristic, a thermal cycle characteristic, impact resistance, and fluidity in a coating step are more excellent.

A amount of the monomer unit derived from the vinyl cyanide compound in the rigid copolymer (B) is not particularly limited, and is, for example, preferably 15% by mass or more and 50% by mass or less, and more preferably 25% by mass or more and 40% by mass or less, relative to the total mass of the rigid copolymer (B).

When the amount of the monomer unit derived from the vinyl cyanide compound in the rigid copolymer (B) is in the range, an adhesion strength characteristic, a thermal cycle characteristic, impact resistance, and fluidity in a coating step are more excellent.

A mass average molecular weight of the rigid copolymer (B) may be, for example, 50,000 or more and 150,000 or less.

The mass average molecular weight of the rigid copolymer (B) is a standard polystyrene equivalent value measured using gel permeation chromatography (GPC).

The rigid copolymer (B) preferably includes a rigid copolymer (B-I) in which a mass average molecular weight is 50,000 or more and 80,000 or less and the amount of the monomer unit derived from the vinyl cyanide compound is 30% by mass or more and 35% by mass or less, relative to the total mass of the rigid copolymer. When the rigid copolymer (B-I) is included, an adhesion strength characteristic, a thermal cycle characteristic, impact resistance, and fluidity in a coating step are more excellent.

The mass average molecular weight of the rigid copolymer (B-I) is more preferably 60,000 or more and 80,000 or less. The amount of the monomer unit derived from the vinyl cyanide compound relative to the total mass of the rigid copolymer (B-I) is more preferably 31% by mass or more and less than 34% by mass.

The amount of the rigid copolymer (B-I) in the rigid copolymer (B) is preferably 20% by mass or more and more preferably 35% by mass or more, relative to the total mass of the rigid copolymer (B). The upper limit of the amount of the rigid copolymer (B-I) is preferably 90% by mass or less in terms of impact resistance.

The rigid copolymer (B) (the rigid copolymer (B-I) or the like) can be produced by copolymerizing the aromatic vinyl compound and the vinyl cyanide compound, and another copolymerizable compound as needed.

As a polymerization method, any known polymerization method such as emulsion polymerization, suspension polymerization, bulk polymerization, or a method combining these can be applied.

### <Other components>

Examples of other components include various additives and other resins.

Examples of the additives include a known antioxidant, a light stabilizer, an UV absorber, a lubricant, a plasticizer, a stabilizer, a transesterification inhibitor, a hydrolysis inhibitor, a release agent, an antistatic agent, a colorant (such as a pigment and a dye), a filler such as a carbon fiber, a glass fiber, wollastonite, calcium carbonate, silica, and talc, a flame retardant such as a brominated flame retardant and a phosphorus flame retardant, a flame retardant aid such as antimony trioxide, a drip preventing agent such as fluororesin, an antibacterial agent, a fungicide, silicon oil, and a coupling agent. Any one kind of these additives may be used alone or a combination of two or more kinds thereof may be used.

Examples of other resins include rubber-reinforced styrene resins such as HIPS resin, ABS resin, ASA resin, AES resin, SAS resin, AS resin, polystyrene resin, nylon resin, methacrylic resin, polyvinyl chloride resin, polybutylene terephthalate resin, polyethylene terephthalate resin, polyphenylene ether resin, and polycarbonate resin. In addition, a resin obtained by blending two or more kinds of these resins may be used, or a modification of these resins with a compatibilizing agent or a functional group may also be used.

As for essential components or optional components used in the present invention, in any case, if there is no problem in quality, it is possible to use a recovered product from a polymerization step, a processing step, or a step at the time of molding or a recycling product recovered from the market.

### <Content of each component>

In the thermoplastic resin composition for coating of the present invention, when a total mass of the rubber-containing graft copolymer mixture (A) and the rigid copolymer (B) is set as 100 parts by mass, an amount of the rubber-containing graft copolymer mixture (A) is 25 parts by mass or more and 50 parts by mass or less, and an amount of the rigid copolymer (B) is 50 parts by mass or more and 75 parts by mass or less. The amount of the rubber-containing graft copolymer mixture (A) is preferably 35 parts by mass or more and 45 parts by mass or less and the amount of the rigid copolymer (B) is preferably 55 parts by mass or more and 65 parts by mass or less. When each amount of the rubber-containing graft copolymer mixture (A) and the rigid copolymer (B) is within the range, an adhesion strength characteristic, a thermal cycle characteristic, impact resistance, and fluidity in a coating step are excellent.

When the total mass of the rubber-containing graft copolymer mixture (A) and the rigid copolymer (B) is set as 100 parts by mass, the amount of the other components in the thermoplastic resin composition for coating of the present invention is preferably 0 parts by mass or more and 250 parts by mass or less, and more preferably 0 parts by mass or more and 100 parts by mass or less.

### <Method of producing thermoplastic resin composition for coating>

The thermoplastic resin composition for coating of the present invention is produced by mixing and kneading the rubber-containing graft copolymer mixture (A) and the rigid copolymer (B), and other components used as needed. The method of mixing and kneading each component of the thermoplastic resin composition is not particularly limited, and any general mixing and kneading method can be employed. Examples thereof include a method of kneading an extruder, a Banbury mixer, a kneading roll, and the like, and then cutting with a pelletizer to pelletize.

The thermoplastic resin composition for coating of the present invention is molded into a resin molded article.

In the thermoplastic resin composition for coating of the present invention, the rubber-containing graft copolymer mixture (A) and the rigid copolymer (B) are included, the rubber-containing graft copolymer mixture (A) includes the rubber-containing graft copolymer (A-I) and the rubber-containing graft copolymer (A-II), the amount of the rubber-containing graft copolymer (A-I) is 60% by mass or more and less than 95% by mass, and when the total mass of the rubber-containing graft copolymer mixture (A) and the rigid copolymer (B) is set as 100 parts by mass, the amount of the rubber-containing graft copolymer mixture (A) is 25 parts by mass or more and 50 parts by mass or less, and the amount of the rigid copolymer (B) is 50 parts by mass or more and 75 parts by mass or less. Therefore, a resin molded article in which excellent coating adhesion strength can be exhibited even when high-speed molding is performed, a coating appearance hardly changes in a thermal cycle, and impact resistance is excellent is obtained. In addition, the resin molded article is also excellent in fluidity during a molding process.

### [Resin molded article]

The resin molded article of the present invention includes the thermoplastic resin composition of the present invention described above.

The resin molded article of the present invention is obtained by molding the thermoplastic resin composition of the present invention.

The molding method is not limited at all. Examples of the molding method include an injection molding method, an extrusion molding method, a press molding method, an insert molding method, a vacuum molding method, and a blow molding method.

In the resin molded article of the present invention, the thermoplastic resin composition for coating of the present invention is used. Therefore, the resin molded article expresses excellent coating adhesion strength when subjected to a coating treatment even in a case where high-speed molding is performed, has a coating appearance that hardly changes in a thermal cycle, and is also excellent in impact resistance.

### [Coated article]

A coated article of the present invention includes the resin molded article of the present invention described above and a coating film formed on at least a part of a surface of the resin molded article.

The coated article of the present invention is obtained by carrying out a coating treatment on the resin molded article of the present invention. A coating treatment method is not limited at all. Examples of the coating treatment method include an electroless coating method, a direct coating method, and a non-chrome coating method.

In the coated article of the present invention, the resin molded article of the present invention is used. Therefore, the coated article is excellent in adhesion strength between the resin molded article and the coating film, has a coating appearance that hardly changes during the thermal cycle, and is also excellent in impact resistance.

The coated article of the present invention can be used for a wide variety of applications including office automation (OA) equipment, data communication equipment, an electronic and electric apparatus, a home electric appliance, a motor vehicle, and construction.

### EXAMPLES

Hereinafter, the present invention will be described in more detail using synthesis examples, examples, and comparative examples, but the present invention is not limited to the following examples, as long as it does not depart from the gist.

In the following, "part(s)" means "part(s) by mass".

### <Mass particle size distribution of rubbery polymer>

The mass-based particle size distribution is measured in a water dilution solution of latex of the rubbery polymer, by using a nanoparticle size distribution analyzer (Nanotrac UPA-EX150, manufactured by Nikkiso Co. Ltd.) based on the principle of dynamic scattering. From the obtained particle size distribution, a mass average particle size (µm) and a proportion (% by mass) of particles having particle sizes of larger than 0.122 µm and 0.243 µm or smaller in all particles (hereinafter referred to as "% by mass of particles larger than 0.122 µm and 0.243 µm or smaller") were determined.

### <Composition ratio of rigid copolymer (B)>

For a composition ratio of the rigid copolymer (B), the amount of monomer remaining after the reaction was finished was quantified by GC-2014 (Shimadzu), and a fixed amount (amount incorporated into the copolymer as a monomer unit) was determined from the value.

### <Mass average molecular weight (Mw) of rigid copolymer (B)>

A solution obtained by dissolving the rigid copolymer (B) in tetrahydrofuran was used as a measurement sample, and measured using a GPC apparatus (manufactured by Tosoh Corporation). Calculation was performed by a standard polystyrene conversion method.

### <Synthesis Example 1: rubbery polymer (S-1)>

A reactor is charged with 150 parts of water, 3.3 parts of beef tallow fatty acid potassium salt, 0.14 parts of potassium hydroxide, 0.3 parts of sodium pyrophosphate, and 0.20 parts of t-dodecyl mercaptan, and then further charged with 100 parts of 1,3-butadiene. The temperature was raised to 62°C. Subsequently, 0.12 parts of potassium persulfate were pressed therein to initiate polymerization. A reaction was performed by allowing the temperature to reach 75°C over 10 hours. Furthermore, after reacting at 75°C for 1 hour, 0.08 parts of sodium formaldehyde sulfoxylate were pressed therein. After remaining 1,3-butadiene was removed, a polymer was taken out to obtain latex of a rubbery polymer (S-1). The mass average particle size of the obtained rubbery polymer (S-1) was 0.08 µm.

### <Synthesis Example 2: rubbery polymer (G-1)>

A reactor was charged with 100 parts of the latex of the rubbery polymer (S-1) in terms of solid content and 0.15 parts of sodium dodecylbenzenesulfonate, and the solid content was adjusted to 36.5% by adding water. After raising the temperature by 30°C, 0.5 parts of acetic acid were added and then stirred for 10 minutes, and neutralized with potassium hydroxide to obtain latex of a rubbery polymer (G-1). The mass average particle size of the obtained rubbery polymer (G-1) was 0.15 µm.

### <Synthesis Example 3: rubbery polymer (G-2)>

A reactor was charged with 100 parts of the latex of the rubbery polymer (S-1) in terms of solid content and 0.15 parts of sodium dodecylbenzenesulfonate, and a solid content was adjusted to 36.5% by adding water. After raising the temperature by 30°C, 1.0 part of acetic acid was added and then stirred for 10 minutes, and neutralized with potassium hydroxide to obtain latex of a rubbery polymer (G-2). The mass average particle size of the obtained rubbery polymer (G-2) was 0.18 µm.

### <Synthesis Example 4: rubbery polymer (G-3)>

A reactor was charged with 100 parts of the latex of the rubbery polymer (S-1) in terms of solid content and 0.15 parts of sodium dodecylbenzenesulfonate, and a solid content was adjusted to 36.5% by adding water. After raising the temperature by 30°C, 1.3 parts of acetic acid were added and then stirred for 10 minutes, and neutralized with potassium hydroxide to obtain latex of a rubbery polymer (G-3). The mass average particle size of the obtained rubbery polymer (G-3) was 0.20 µm.

### <Synthesis Example 5: rubbery polymer (G-4)>

A reactor was charged with 100 parts of the latex of the rubbery polymer (S-1) in terms of solid content and 0.15 parts of sodium dodecylbenzenesulfonate, and a solid content was adjusted to 36.5% by adding water. After raising the temperature by 30°C, 1.6 parts of acetic acid were added and then stirred for 10 minutes, and neutralized with potassium hydroxide to obtain latex of a rubbery polymer (G-4). The mass average particle size of the obtained rubbery polymer (G-4) was 0.22 µm.

### <Synthesis Example 6: rubbery polymer (g-5)>

A reactor was charged with 100 parts of the latex of the rubbery polymer (S-1) in terms of solid content and 0.15 parts of sodium dodecylbenzenesulfonate, and a solid content was adjusted to 36.5% by adding water. After raising the temperature by 30°C, 0.4 parts of acetic acid were added and then stirred for 10 minutes, and neutralized with potassium hydroxide to obtain latex of a rubbery polymer (g-5). The mass average particle size of the obtained rubbery polymer (g-5) was 0.14 µm.

### <Synthesis Example 7: rubbery polymer (S-2)>

A reactor is charged with 120 parts of water, 1.4 parts of potassium rosinate, 0.6 parts of beef tallow fatty acid potassium salt, 0.001 parts of sodium hydroxide, 0.2 parts of anhydrous sodium sulfate, 1.4 parts of styrene, and 0.15 parts of t-dodecyl mercaptan, purged with nitrogen, and then further charged with 26.2 parts of 1,3-butadiene and 0.1 parts of diisopropylbenzene hydroperoxide. The temperature was raised to 50°C. Subsequently, an aqueous solution in which 0.002 parts of ferric sulfate heptahydrate, 0.09 parts of sodium pyrophosphate, and 0.34 parts of sodium formaldehyde sulfoxylate were dissolved in 6.4 parts of water was pressed therein to initiate polymerization, and then the temperature was raised to 56°C over 30 minutes. The reaction was performed for 7 hours while sequentially adding 68.8 parts of 1,3-butadiene, 3.6 parts of styrene, 1.5 parts of diisopropylbenzene hydroperoxide, and 0.28 parts of t-dodecyl mercaptan, and then performed by allowing the temperature to reach 65°C over 1 hour. Furthermore, after reacting at 65°C for 1 hour, remaining 1,3-butadiene was removed, and a polymer was taken out to obtain latex of a rubbery polymer (S-2). The mass average particle size of the obtained rubbery polymer (S-2) was 0.09 µm.

### <Synthesis Example 8: rubber-containing graft copolymer (A-I-1)>

A reactor is charged with 40 parts of latex of the rubbery polymer (G-1) in terms of solid content, 85 parts of water, 0.3 parts of potassium rosinate, and 0.42 parts of fructose, and then an aqueous solution in which 0.008 parts of ferric acid heptahydrate and 0.21 parts of sodium pyrophosphate were dissolved in 5 parts of water was added thereto. Thereafter, a temperature was raised to 60°C. The reaction was performed by allowing the temperature to reach 75°C, after heating was performed for 150 minutes to raise the temperature from the initiation temperature of 60°C, while sequentially adding 44.4 parts of styrene, 15.6 parts of acrylonitrile, 0.42 parts of cumene hydroperoxide, and 0.24 parts of t-dodecyl mercaptan. Latex of a rubber-containing graft copolymer (A-I-1) was obtained. The latex of the rubber-containing graft copolymer (A-I-1) was formed into a powdery rubber-containing graft copolymer through a known coagulation drying step. Table 1 shows the mass average particle size and particle size distribution of the rubbery polymer in the rubber-containing graft copolymer (A-I-1).

### <Synthesis Example 9: rubber-containing graft copolymer (A-I-2)>

Except that the latex of the rubbery polymer (G-1) was changed to the latex of the rubbery polymer (G-2), polymerization was performed in the same manner as in Synthesis Example 8 to obtain a rubber-containing graft copolymer (A-I-2). Table 1 shows the mass average particle size and particle size distribution of the rubbery polymer of the obtained rubber-containing graft copolymer (A-I-2).

### <Synthesis Example 10: rubber-containing graft copolymer (A-I-3)>

Except that the latex of the rubbery polymer (G-1) was changed to the latex of the rubbery polymer (G-3), polymerization was performed in the same manner as in Synthesis Example 8 to obtain a rubber-containing graft copolymer (A-I-3). Table 1 shows the mass average particle size and particle size distribution of the rubbery polymer of the obtained rubber-containing graft copolymer (A-I-3).

### <Synthesis Example 11: rubber-containing graft copolymer (A-I-4)>

Except that the latex of the rubbery polymer (G-1) was changed to the latex of the rubbery polymer (G-4), polymerization was performed in the same manner as in Synthesis Example 8 to obtain a rubber-containing graft copolymer (A-I-4). Table 1 shows the mass average particle size and particle size distribution of the rubbery polymer of the obtained rubber-containing graft copolymer (A-I-4).

### <Synthesis Example 12: rubber-containing graft copolymer (A-I-5)>

Except that the latex of the rubbery polymer (G-1) was changed to the rubbery polymer (g-5), polymerization was performed in the same manner as in Synthesis Example 8 to obtain a rubber-containing graft copolymer (A-I-5). Table 1 shows the mass average particle size and particle size distribution of the rubbery polymer of the obtained rubber-containing graft copolymer (A-I-5).

### <Synthesis Example 13: acid group-containing copolymer (K-1)>

A reactor was charged with 200 parts of water, 88 parts of n-butyl acrylate, 12 parts of methacrylic acid, 2 parts of potassium oleate, 1 part of sodium dioctyl sulfosuccinate, 0.4 parts of cumene hydroperoxide, and 0.3 parts of sodium formaldehyde sulfoxylate, and polymerization was performed at 70°C for 4 hours. The mass average particle size of latex of the obtained acid group-containing copolymer (K-1) was 0.07 µm, and a pH thereof was 9.1.

### <Synthesis Example 14: acid group-containing copolymer (K-2)>

Except that there was a change to 85 parts of n-butyl acrylate and 15 parts of methacrylic acid, polymerization was performed in the same manner as Synthesis Example 13 to obtain latex of the acid group-containing copolymer (K-3). The mass average particle size of latex of the obtained acid group-containing copolymer (K-3) was 0.121 µm, and a pH thereof was 9.2.

### <Synthesis Example 15: acid group-containing copolymer (K-3)>

Except that there was a change to 80 parts of n-butyl acrylate, 20 parts of methacrylic acid, and 1.5 parts of potassium oleate, polymerization was performed in the same manner as Synthesis Example 13 to obtain latex of the acid group-containing copolymer (K-3). The mass average particle size of latex of the obtained acid group-containing copolymer (K-3) was 0.145 µm, and a pH thereof was 9.2.

### <Synthesis Example 16: acid group-containing copolymer (K-4)>

Except that there was a change to 87 parts of n-butyl acrylate, 13 parts of methacrylic acid, and 2.5 parts of potassium oleate, polymerization was performed in the same manner as Synthesis Example 13 to obtain latex of the acid group-containing copolymer (K-2). The mass average particle size of latex of the obtained acid group-containing copolymer (K-4) was 0.095 µm, and a pH thereof was 9.1.

### <Synthesis Example 17: rubber-containing graft copolymer (A-I-6)>

45 parts of the latex of the rubbery polymer (S-2) in terms of solid content were added to a reactor, and then 0.8 parts of the latex of the acid group-containing copolymer (K-1) in terms of solid content were added thereto, and then stirred for 40 minutes to obtain an enlarged rubbery polymer (g-6). Next, 40 parts of water and 0.45 parts of dextrose were added thereto and the temperature thereof was raised to 50°C, and then 0.006 parts of ferric acid heptahydrate and 0.12 parts of sodium pyrophosphate were added thereto. The reaction was performed by allowing the temperature to reach 65°C from the initiation temperature of 50°C, while sequentially adding 39.0 parts of styrene, 16.0 parts of acrylonitrile, 0.50 parts of t-dodecyl mercaptan, and 0.44 parts of cumene hydroperoxide to obtain latex of a rubber-containing graft copolymer (A-I-6). The latex of the rubber-containing graft copolymer (A-I-6) was formed into a powdery rubber-containing graft copolymer through a known coagulation drying step. Table 1 shows the mass average particle size and particle size distribution of the enlarged rubbery polymer (g-6) of the obtained rubber-containing graft copolymer (A-I-6).

### <Synthesis Example 18: rubber-containing graft copolymer (A-II-1)>

60 parts of the latex of the rubbery polymer (S-2) in terms of solid content were added to a reactor, and then 1.3 parts of the latex of the acid group-containing copolymer (K-2) in terms of solid part were added thereto, and then stirred for 40 minutes to obtain an enlarged rubbery polymer (G-7). Next, 28 parts of water, 0.45 parts of dextrose, 2.8 parts of styrene, 1.2 parts of acrylonitrile, 0.075 parts of t-dodecyl mercaptan, and 0.016 parts of cumene hydroperoxide were added thereto and the temperature thereof was raised to 50°C. Then 0.002 parts of ferric acid heptahydrate and 0.05 parts of sodium pyrophosphate were added thereto.

The reaction was performed by allowing the temperature to reach 65°C from the initiation temperature of 50°C while sequentially adding 25.6 parts of styrene, 10.4 parts of acrylonitrile, 0.68 parts of t-dodecyl mercaptan, and 0.14 parts of cumene hydroperoxide to obtain latex of a rubber-containing graft copolymer (A-II-1). The latex of the rubber-containing graft copolymer (A-II-1) was formed into a powdery rubber-containing graft copolymer through a known coagulation drying step. Table 1 shows the mass average particle size and particle size distribution of the enlarged rubbery polymer (G-7) of the obtained rubber-containing graft copolymer (A-II-1).

### <Synthesis Example 19: rubber-containing graft copolymer (A-II-2)>

Except that there was a change to the latex of the acid group-containing copolymer (K-3), polymerization was performed in the same manner as in Synthesis Example 17 to obtain latex of a rubber-containing graft copolymer (A-II-2). Table 1 shows the mass average particle size and particle size distribution of an enlarged rubbery polymer (G-8) of the obtained rubber-containing graft copolymer (A-II-2).

### <Synthesis Example 20: rubbery polymer (g-9)>

100 parts of the latex of the rubbery polymer (S-2) in terms of solid content were added to a reactor, and then 1.3 parts of the latex of the acid group-containing copolymer (K-3) in terms of solid part were added thereto, and then stirred for 40 minutes to obtain an enlarged rubbery polymer (g-9). The mass average particle size of the obtained rubbery polymer (g-9) was 0.44 µm.

### <Synthesis Example 21: rubbery polymer (g-10)>

100 parts of the latex of the rubbery polymer (S-2) in terms of solid content were added to a reactor, and then 1.3 parts of the latex of the acid group-containing copolymer (K-4) in terms of solid part were added thereto, and then stirred for 40 minutes to obtain an enlarged rubbery polymer (g-10). The mass average particle size of the obtained rubbery polymer (g-10) was 0.28 µm.

### <Synthesis Example 22: rubber-containing graft copolymer (A-II-3)>

A reactor is charged with 9 parts by mass of the enlarged rubbery polymer (g-9) in terms of solid content, 36 parts by mass of the enlarged rubbery polymer (g-10) in terms of solid content, 85 parts of water, 0.3 parts of potassium rosinate, and 0.42 parts of fructose, and then an aqueous solution in which 0.008 parts of ferric acid heptahydrate and 0.21 parts of sodium pyrophosphate were dissolved in 5 parts of water was added thereto. Thereafter, the temperature was raised to 60°C. The reaction was performed by allowing the temperature to reach 73°C, after heating was performed for 150 minutes to raise the temperature from the initiation temperature of 60°C, while sequentially adding 39 parts of styrene, 16 parts of acrylonitrile, 0.42 parts of cumene hydroperoxide, and 0.24 parts of t-dodecyl mercaptan. Latex of a rubber-containing graft copolymer (A-II-3) was obtained. The latex of the rubber-containing graft copolymer (A-II-3) was formed into a powdery rubber-containing graft copolymer through a known coagulation drying step. Table 1 shows the mass average particle size and particle size distribution of each of the rubbery polymers (g-9) and (g-10) of the obtained rubber-containing graft copolymer (A-II-3).

**[Table 1]**

| | | Rubbery polymer | | | | | | | | | | |
|---|---|---|---|---|---|---|---|---|---|---|---|---|
| Rubber-containing graft copolymer | | Kind | Mass average particle size (µm) | % By mass of particles of larger than 0.122 µm and 0.243 µm or smaller | Particle size distribution (% by mass) | | | | | | | |
| | | | | | 0.102 µm or smaller | Larger than 0.102 µm and 0.122 µm or smaller | Larger than 0.122 µm and 0.145 µm or smaller | Larger than 0.145 µm and 0.172 µm or smaller | Larger than 0.172 µm and 0.204 µm or smaller | Larger than 0.204 µm and 0.243 µm or smaller | Larger than 0.0.243 µm | Total |
| A-I | A-I-1 | G-1 | 0.15 | 56.1 | 19.5 | 16.2 | 20.1 | 17.4 | 11.6 | 7.1 | 8.1 | 100.0 |
| | A-I-2 | G-2 | 0.18 | 65.5 | 8.8 | 12.2 | 17.4 | 22.0 | 15.5 | 10.6 | 13.5 | 100.0 |
| | A-I-3 | G-3 | 0.20 | 72.2 | 7.0 | 11.6 | 18.4 | 22.7 | 19.6 | 11.4 | 9.2 | 100.0 |
| | A-I-4 | G-4 | 0.22 | 64.2 | 4.9 | 6.6 | 11.3 | 17.9 | 20.9 | 14.1 | 24.2 | 100.0 |
| | A-I-5 | g-5 | 0.14 | 56.0 | 23.1 | 18.8 | 24.0 | 16.6 | 10.0 | 5.4 | 2.1 | 100.0 |
| | A-I-6 | g-6 | 0.20 | 44.7 | 10.5 | 6.0 | 7.5 | 9.6 | 12.5 | 15.1 | 38.9 | 100.0 |
| A-II | A-II-1 | G-7 | 0.34 | 23.5 | 6.5 | 4.1 | 5.1 | 5.6 | 6.0 | 6.9 | 65.8 | 100.0 |
| | A-II-2 | G-8 | 0.44 | 18.6 | 1.4 | 1.8 | 2.9 | 3.8 | 5.1 | 6.8 | 78.2 | 100.0 |
| | A-II-3 | g-9 | 0.44 | 18.6 | 1.4 | 1.8 | 2.9 | 3.8 | 5.1 | 6.8 | 78.2 | 100.0 |
| | | g-10 | 0.28 | 41.8 | 0.2 | 1.0 | 17.6 | 13.6 | 7.7 | 3.0 | 57.0 | 100.0 |

### <Synthesis Example 23: rigid copolymer (B-1)>

A reactor was charged with a monomer mixture including 125 parts of water, 0.4 parts of calcium phosphate, 0.003 parts of alkenyl succinic acid potassium salt, 0.05 parts of 1,1,3,3-tetramethylbutylperoxy-2-ethylhexanoate, 0.04 parts of 1,1-di(t-hexylperoxy)cyclohexane, 0.04 parts of t-butylperoxy-2-ethylhexyl carbonate, 0.38 parts of t-dodecyl mercaptan, 72 parts of styrene, and 28 parts of acrylonitrile to perform reaction. The reaction was performed by allowing the temperature to reach 125°C, after heating was performed for 6.5 hours to raise temperature from the initiation temperature of 65°C, while sequentially adding parts of water, acrylonitrile, and styrene. Furthermore, after the reaction was performed at 125°C for 1 hour, slurry of a rigid copolymer (B-1) was obtained. After cooling, the slurry was centrifuged and dehydrated to obtain the rigid copolymer (B-1). The mass average molecular weight of the obtained rigid copolymer was 121,000, and an amount of the monomer unit derived from a vinyl cyanide compound was 27.2% by mass.

### <Synthesis Example 24: rigid copolymer (B-2)>

Except that the amount of styrene was changed to 75 parts, the amount of acrylonitrile was changed to 25 parts, and the amount of t-dodecyl mercaptan was changed to 0.55 parts, polymerization was performed in the same manner as Synthesis Example 23 to obtain a rigid copolymer (B-2). The mass average molecular weight of the obtained rigid copolymer (B-2) was 79,000, and the amount of the monomer unit derived from a vinyl cyanide compound was 24.4% by mass.

### <Synthesis Example 25: rigid copolymer (B-I-1)>

Except that the amount of styrene was changed to 66 parts, the amount of acrylonitrile was changed to 34 parts, and the amount of t-dodecyl mercaptan was changed to 0.51 parts, polymerization was performed in the same manner as Synthesis Example 23 to obtain a rigid copolymer (B-I-1). The mass average molecular weight of the obtained rigid copolymer (B-I-1) was 71,000, and the amount of the monomer unit derived from a vinyl cyanide compound was 32.3% by mass.

### <Synthesis Example 26: rigid copolymer (B-I-2)>

Except that the amount of styrene was changed to 68 parts, the amount of acrylonitrile was changed to 32 parts, and the amount of t-dodecyl mercaptan was changed to 0.88 parts, polymerization was performed in the same manner as Synthesis Example 23 to obtain a rigid copolymer (B-I-2). The mass average molecular weight of the obtained rigid copolymer was 53,000, and the amount of the monomer unit derived from a vinyl cyanide compound was 30.2% by mass.

### <Synthesis Example 27: rigid copolymer (B-I-3)>

Except that the amount of styrene was changed to 62 parts, the amount of acrylonitrile was changed to 38 parts, and the amount of t-dodecyl mercaptan was changed to 0.87 parts, polymerization was performed in the same manner as Synthesis Example 23 to obtain a rigid copolymer (B-I-3). The mass average molecular weight of the obtained rigid copolymer was 52,000, and the amount of the monomer unit derived from a vinyl cyanide compound was 34.8% by mass.

### <Synthesis Example 28: rigid copolymer (B-I-4)>

Except that the amount of t-dodecyl mercaptan was changed to 0.58 parts, polymerization was performed in the same manner as Synthesis Example 26 to obtain a rigid copolymer (B-I-4). The mass average molecular weight of the obtained rigid copolymer was 78,000, and the amount of the monomer unit derived from a vinyl cyanide compound was 30.1% by mass.

### <Synthesis Example 29: rigid copolymer (B-I-5)>

Except that the amount of t-dodecyl mercaptan was changed to 0.55 parts, polymerization was performed in the same manner as Synthesis Example 27 to obtain a rigid copolymer (B-I-5). The mass average molecular weight of the obtained rigid copolymer was 79,000, and the amount of the monomer unit derived from a vinyl cyanide compound was 34.7% by mass.

### <Examples 1 to 16 and Comparative Examples 1 to 8>

### (Production of thermoplastic resin composition)

The rubber-containing graft copolymers (A-I and A-II) and the rigid copolymer (B) were mixed with a ratio shown in Tables 2 to 4 to prepare the thermoplastic resin composition for coating.

The obtained thermoplastic resin composition for coating was melt-kneaded at a temperature of 200°C using a 30 mm twin screw extruder ("Tex30α" manufactured by Nippon Steel Works, Ltd.), and each of which was pelletized to obtain pellets of the thermoplastic resin composition for coating.

The following evaluations were performed for the thermoplastic resin composition for coating in each example. Results are shown in Tables 2 to 4.

### (Evaluation of coating adhesion strength)

The pellets of the thermoplastic resin composition were injection molded using a 75-ton injection molding machine ("JSW-75EIIP" manufactured by Nippon Steel Works, Ltd.) to obtain a test piece. The injection molding was performed by using a mold for coating adhesion strength evaluation (length 90 mm × width 50 mm × thickness 3 mm), under conditions of a cylinder temperature of 250°C, a mold temperature of 60°C, and any injection speed of three levels of low speed (1 mm/sec), medium speed (3 mm/sec), and high speed (10 mm/sec).

The obtained test piece was subjected to a coating process. The coating film was peeled off in a vertical direction on a load measuring device and a strength thereof was measured to determine the coating adhesion strength according to the following criteria.
A: Coating adhesion strength exceeds 15 N/cm, which is very excellent.
B: Coating adhesion strength is 9.8 N/cm or more and less than 12 N/cm, which has no practical problem.
C: Coating adhesion strength is 9.8 N/ or less, which is below the practical level.

In the evaluation of the coating adhesion strength, the coating process was carried out according to the following procedures (1) to (15).

### (1) Degreasing step [50°C × 5 min]

Immersing was performed for 5 minutes in an alkaline degreasing solution heated at 50°C.

### (2) Washing with water

Immersing was performed in water at 23°C for 1 minute to perform washing with water.

### (3) Etching treatment (CrO₃: 400 g/l, sulfuric acid: 200 ml/1) [65°C × 15 min]

An etching solution including 400 g/l of chromic anhydride and 200 ml/l of 98% sulfuric acid was heated to 65°C and immersing was performed for 10 minutes.

### (4) Washing with water

Immersing was performed in water at 23°C for 1 minute to perform washing with water.

### (5) Acid treatment [23°C × 1 min]

Immersing in an acid treatment solution at 23°C including 100 ml/l of 35% hydrochloric acid was performed for 1 minute.

### (6) Washing with water

Immersing was performed in water at 23°C for 1 minute to perform washing with water.

### (7) Catalyzing treatment [30°C × 3 min]

A tin-palladium mixed catalyst solution generally called a catalyst was heated to 30°C and immersing was performed therein for 3 minutes.

### (8) Washing with water

Immersing was performed in water at 23°C for 1 minute to perform washing with water.

### (9) Activation treatment [40°C × 3 min]

An activation solution including 100 ml/l of 98% sulfuric acid was heated to 40°C and immersing was performed for 3 minutes.

### (10) Washing with water

Immersing was performed in water at 23°C for 1 minute to perform washing with water.

### (11) Chemical Ni coating treatment [40°C × 5 min]

A chemical Ni coating solution using hypophosphite as a reducing agent was heated to 40°C and immersed was performed for 5 minutes.

### (12) Washing with water

Immersing was performed in water at 23°C for 1 minute to perform washing with water.

### (13) Electrolytic copper coating treatment [film thickness: 35 µm, 20°C × 60 min]

An electrolytic copper coating solution including copper sulfate, sulfuric acid, and a brightener was set at 20°C, and coating was carried out for 60 minutes to obtain a copper coating film having a thickness of 35 µm.

### (14) Washing with water

Immersing was performed in water at 23°C for 1 minute to perform washing with water.

### (15) Drying [80°C × 2 hours]

An obtained coated article was dried for 2 hours with a hot air dryer set at 80°C.

### (Evaluation of thermal cycle characteristic)

The pellets of the thermoplastic resin composition were injection molded using a 75-ton injection molding machine ("JSW-75EIIP" manufactured by Nippon Steel Works, Ltd.) to obtain a test piece. The injection molding was performed by using a mold for thermal cycle evaluation (length 100mm × width 100mm × thickness 3 mm), under conditions of a cylinder temperature of 200°C, a mold temperature of 60°C, and injection speed of 30 mm/sec.

An obtained test piece was subjected to a coating process and 8 cycles of heating, where one cycle is [cooling at -40°C for 1 hour and heating at 80°C for 1 hour]. Thereafter, a state of the coating film of a product was visually observed, and a thermal cycle characteristic was determined according to the following criteria.
A: There is no change in a coating film, which is very excellent.
B: There is some swelling in a coating film, which has no practical problem.
C: There is a change such as swelling in a coating film, which is below the practical level.

In the evaluation of the thermal cycle characteristic, the coating process was carried out according to the following procedures (1) to (17).

### (1) Degreasing step [50°C × 5 min]

Immersing was performed for 5 minutes in an alkaline degreasing solution heated at 50°C.

### (2) Washing with water

Immersing was performed in water at 23°C for 1 minute to perform washing with water.

### (3) Etching treatment (CrO₃: 400 g/l, sulfuric acid: 200 ml/l) [65°C × 20 min]

An etching solution including 400 g/l of chromic anhydride and 200 ml/l of 98% sulfuric acid was heated to 65°C and immersing was performed for 20 minutes.

### (4) Washing with water

Immersing was performed in water at 23°C for 1 minute to perform washing with water.

### (5) Acid treatment [23°C × 1 min]

Immersing in an acid treatment solution at 23°C including 100 ml/l of 35% hydrochloric acid was performed for 1 minute.

### (6) Washing with water

Immersing was performed in water at 23°C for 1 minute to perform washing with water.

### (7) Catalyzing treatment [30°C × 3 min]

A tin-palladium mixed catalyst solution generally called a catalyst was heated to 30°C and immersing was performed therein for 3 minutes.

### (8) Washing with water

Immersing was performed in water at 23°C for 1 minute to perform washing with water.

### (9) Activation treatment [40°C × 3 min]

An activation solution including 100 ml/l of 98% sulfuric acid was heated to 40°C and immersing was performed for 3 minutes.

### (10) Washing with water

Immersing was performed in water at 23°C for 1 minute to perform washing with water.

### (11) Chemical Ni coating treatment [40°C × 5 min]

A chemical Ni coating solution using hypophosphite as a reducing agent was heated to 40°C and immersed was performed for 5 minutes.

### (12) Washing with water

Immersing was performed in water at 23°C for 1 minute to perform washing with water.

### (13) Electrolytic copper coating treatment [film thickness: 20 µm, 20°C × 20 min]

An electrolytic copper coating solution including copper sulfate, sulfuric acid, and a brightener was set at 20°C, and coating was carried out for 20 minutes to obtain a copper coating film having a thickness of 20 µm.

### (14) Washing with water

Immersing was performed in water at 23°C for 1 minute to perform washing with water.

### (15) Electrolytic Ni coating treatment [film thickness: 10 µm, 55°C × 15 min]

An electrolytic nickel coating solution including nickel sulfate, nickel chloride, and a brightener was set at 55°C, and coating was carried out for 15 minutes to obtain a nickel coating film having a thickness of 15 µm.

### (16) Washing with water

Immersing was performed in water at 23°C for 1 minute to perform washing with water.

### (17) Electrolytic Cr coating treatment [film thickness: 0.3 µm, 45°C × 2 min]

An electrolytic chrome coating solution including chromic anhydride and sulfuric acid was set at 45°C, and coating was carried out for 2 minutes to obtain a chrome coating film having a thickness of 0.3 µm.

### (Evaluation of Charpy impact strength)

The pellets of the thermoplastic resin composition were injection molded using a 75-ton injection molding machine ("J75EII-P" manufactured by Nippon Steel Works, Ltd.) to obtain a test piece (length 80 mm, width 10 mm, and thickness 4 mm). The injection molding was performed under conditions of a molding temperature of 235°C and a mold temperature of 60°C.

For the obtained test piece, Charpy impact strength (notched) was measured at a measurement temperature of 23°C, in accordance with ISO 179, and impact resistance was determined according to the following criteria.
A: Charpy impact strength is 20 kJ/m² or more, which is very excellent.
B: Charpy impact strength is 16 kJ/m² or more and less than 20 kJ/m², which has no practical problem.
C: Charpy impact strength is less than 16 kJ/m², which is below the practical level.

### (Evaluation of fluidity (spiral flow))

The pellets of the thermoplastic resin composition were injection molded using a spiral flow mold (width 15 mm × thickness 2 mm), under conditions of a cylinder temperature of 270°C, a mold temperature of 60°C, and an injection pressure of 100 MPa, from a 85-ton injection molding machine ("J85AD-110H" manufactured by Nippon Steel Works, Ltd.). Spiral flow length (mm) of the obtained molded article was measured, and the fluidity (spiral flow) was determined according to the following criteria.
A: Spiral flow length is 450 mm or more, which is excellent as material.
B: Spiral flow length is 380 mm or more and less than 450 mm, which has no practical problem.
C: Spiral flow length is less than 380 mm, which is below the practical level.

### (Comprehensive determination)

In the above evaluation results, the thermoplastic resin composition in which all evaluations of the coating adhesion strength, the thermal cycle characteristic, the Charpy impact strength, and the fluidity (spiral flow) were "A" was determined as "S" in the comprehensive determination. In addition, the thermoplastic resin composition in which all evaluations were "A" or "B" and the number of "A" was 3 or more was determined as "A" in the comprehensive determination. In addition, the thermoplastic resin composition in which all evaluations were "A" or "B" and the number of "A" was 2 or less was determined as "B" in the comprehensive determination. Any item that includes a determination of "C" was determined as "C" in the comprehensive determination.

**[Table 2]**

| | | | | Example 1 | Example 2 | Example 3 | Example 4 | Example 5 | Example 6 | Example 7 | Example 8 |
|---|---|---|---|---|---|---|---|---|---|---|---|
| Thermoplastic resin composition for coating | Rubber-containing graft copolymer mixture (a) (part(s) by mass) | Rubber-containing graft copolymer (A-I) | A-I-1 | 36 | - | - | - | - | - | - | - |
| | | | A-I-2 | - | 36 | - | - | - | - | - | - |
| | | | A-I-3 | - | - | 36 | - | 36 | 22 | 40 | 42 |
| | | | A-I-4 | - | - | - | 36 | - | - | - | - |
| | | | A-I-5 | - | - | - | - | - | - | - | - |
| | | | A-I-6 | - | - | - | - | - | - | - | - |
| | | Rubber-containine graft copolymer (A-II) | A-II-1 | 6 | 6 | 6 | 6 | - | 4 | 8 | 3 |
| | | | A-II-2 | - | - | - | - | 6 | - | - | - |
| | | | A-II-3 | - | - | - | - | - | - | - | - |
| | | Total of (A-I) and (A-II) | | 42 | 42 | 42 | 42 | 42 | 26 | 48 | 45 |
| | | (A-I) in (A) (% by mass) | | 85.7 | 85.7 | 85.7 | 85.7 | 85.7 | 84.6 | 83.3 | 93.3 |
| | Rigid copolymer (B) (part(s) by mass) | | B-1 | 58 | 58 | 58 | 58 | 58 | 74 | 52 | 55 |
| | | | B-2 | - | - | - | - | - | - | - | - |
| | | | β-I-1 | - | - | - | - | - | - | - | - |
| | | | B-I-2 | - | - | - | - | - | - | - | - |
| | | | B-I-3 | - | - | - | - | - | - | - | - |
| | | | B-I-4 | - | - | - | - | - | - | - | - |
| | | | B-I-5 | - | - | - | - | - | - | - | - |
| Evaluation result | Coating adhesion strength | Low-speed molding | N/cm | 28.2 | 27.6 | 27.4 | 26.2 | 25.8 | 25.2 | 28.4 | 28.6 |
| | | | Determination | A | A | A | A | A | A | A | A |
| | | Medium-speed molding | N/cm | 17.6 | 17.4 | 16.9 | 16.5 | 16.4 | 15.8 | 17.8 | 17.7 |
| | | | Determination | A | A | A | A | A | A | A | A |
| | | High-speed molding | N/cm | 13.2 | 13.2 | 13.1 | 12.8 | 12.8 | 12.2 | 13.3 | 13.4 |
| | | | Determination | A | A | A | A | A | A | A | A |
| | Thermal cycle characteristic | | | A | A | A | A | A | A | A | B |
| | Charpy impact resistance | | kJ/m² | 20 | 23 | 27 | 28 | 29 | 18 | 31 | 30 |
| | | | Determination | A | A | A | A | A | B | A | A |
| | Fluidity (spiral flow) | | mm | 410 | 413 | 412 | 411 | 407 | 438 | 393 | 401 |
| | | | Determination | B | B | B | B | B | B | B | B |
| | Comprehensive determination | | | A | A | A | A | A | A | A | A |

**[Table 3]**

| | | | | Example 9 | Example 10 | Example 11 | Example 12 | Example 13 | Example 14 | Example 15 | Example 16 |
|---|---|---|---|---|---|---|---|---|---|---|---|
| Thermoplastic resin composition for coating | Rubber-containing graft copolymer mixture (a) (part(s) by mass) | Rubber-containing graft copolymer (A-I) | A-I-1 | - | - | - | - | - | - | - | - |
| | | | A-I-2 | - | - | - | - | - | - | - | - |
| | | | A-I-3 | 26 | 36 | 36 | 36 | 36 | 36 | 36 | 36 |
| | | | A-I-4 | - | - | - | - | - | - | - | - |
| | | | A-I-5 | - | - | - | - | - | - | - | - |
| | | | A-I-6 | - | - | - | - | - | - | - | - |
| | | Rubber-containine graft copolymer (A-II) | A-II-1 | 16 | 6 | 6 | 6 | 6 | 6 | 6 | 6 |
| | | | A-II-2 | - | - | - | - | - | - | - | - |
| | | | A-II-3 | - | - | - | - | - | - | - | - |
| | | Total of (A-I) and (A-II) | | 42 | 42 | 42 | 42 | 42 | 42 | 42 | 42 |
| | | (A-I) in (A) (% by mass) | | 61.9 | 85.7 | 85.7 | 85.7 | 85.7 | 85.7 | 85.7 | 85.7 |
| | Rigid copolymer (B) (part(s) by mass) | | B-1 | 58 | - | 36 | 36 | 36 | 36 | 36 | 46 |
| | | | B-2 | - | 58 | - | - | - | - | - | - |
| | | | B-I-1 | - | - | 22 | - | - | - | - | 12 |
| | | | B-I-2 | - | - | - | 22 | - | - | - | - |
| | | | B-I-3 | - | - | - | - | 22 | - | - | - |
| | | | B-I-4 | - | - | - | - | - | 22 | - | - |
| | | | B-I-5 | - | - | - | - | - | - | 22 | - |
| Evaluation result | Coating adhesion strength | Low-speed molding | N/cm | 25.2 | 24.2 | 26.7 | 26.4 | 26.2 | 27.3 | 27.1 | 27.1 |
| | | | Determination | A | A | A | A | A | A | A | A |
| | | Medium-speed molding | N/cm | 15.7 | 14.8 | 16.5 | 16.3 | 16.2 | 16.7 | 16.7 | 16.6 |
| | | | Determination | A | A | A | A | A | A | A | A |
| | | High-speed molding | N/cm | 12.3 | 10.5 | 12.8 | 12.6 | 12.7 | 12.9 | 12.9 | 13.0 |
| | | | Determination | A | B | A | A | A | A | A | A |
| | Thermal cycle characteristic | | | A | A | A | A | A | A | A | A |
| | Charpy impact resistance | | kJ/m² | 28 | 19 | 26 | 25 | 25 | 27 | 26 | 27 |
| | | | Determination | A | B | A | A | A | A | A | A |
| | Fluidity (spiral flow) | | mm | 420 | 480 | 466 | 492 | 486 | 461 | 454 | 453 |
| | | | Determination | B | A | A | A | A | A | A | A |
| | Comprehensive determination | | | A | A | S | S | S | S | S | S |

**[Table 4]**

| | | | | | Comparative Example 1 | Comparative Example 2 | Comparative Example 3 | Comparative Example 4 | Comparative Example 5 | Comparative Example 6 | Comparative Example 7 | Comparative Example 8 |
|---|---|---|---|---|---|---|---|---|---|---|---|---|
| Thermoplastic resin composition for coating | Rubber-conta ining graft copolymer mixture (a) (part(s) by mass) | Rubber-contain ing graft copolymer (A-I) | | A-I-1 | - | - | - | - | - | - | - | - |
| | | | | A-I-2 | - | - | - | - | - | - | 20 | - |
| | | | | A-I-3 | 40 | 18 | 42 | - | - | - | - | - |
| | | | | A-I-4 | - | - | - | - | - | - | 20 | - |
| | | | | A-I-5 | - | - | - | - | 36 | - | - | - |
| | | | | A-I-6 | - | - | - | - | - | 36 | - | - |
| | | Rubber-contain ing graft copolymer (A-II) | | A-II-1 | - | 14 | 2 | 30 | 6 | 6 | - | - |
| | | | | A-II-2 | - | - | - | - | - | - | - | - |
| | | | | A-II-3 | - | - | - | - | - | - | - | 35 |
| | | Total of (A-I) and (A-II) | | | 40 | 32 | 44 | 30 | 42 | 42 | 40 | 35 |
| | | (A-I) in (A) (% by mass) | | | 100 | 56 | 95 | 0 | 86 | 86 | 100 | - |
| | Rigid copolymer (B) (part(s) by mass) | | | B-1 | 60 | 68 | 56 | 70 | 58 | 58 | 60 | 65 |
| | | | | B-2 | - | - | - | - | - | - | - | - |
| | | | | B-I-1 | - | - | - | - | - | - | - | - |
| | | | | B-I-2 | - | - | - | - | - | - | - | - |
| | | | | B-I-3 | - | - | - | - | - | - | - | - |
| | | | | B-I-4 | - | - | - | - | - | - | - | - |
| | | | | B-I-5 | - | - | - | - | - | - | - | - |
| Evaluation result | Coating adhesion strength | Low-speed molding | | N/cm | 28.2 | 22.2 | 28.8 | 24.2 | 28.4 | 24.5 | 28.1 | 24.1 |
| | | | | Determination | A | A | A | A | A | A | A | A |
| | | Medium-speed molding | | N/cm | 19.2 | 11.8 | 17.9 | 9.5 | 17.6 | 10.5 | 19.2 | 9.3 |
| | | | | Determination | A | B | A | C | A | B | A | C |
| | | High-s mold | peed ing | N/cm | 14.8 | 8.2 | 13.4 | 6.5 | 13.1 | 8.3 | 14.7 | 6.3 |
| | | | | Determination | A | C | A | C | A | C | A | C |
| | Thermal cycle characteristic | | | | C | A | C | A | C | A | C | A |
| | Charpy impact resistance | | | kJ/m² | 14 | 24 | 21 | 28 | 15 | 27 | 15 | 27 |
| | | | | Determination | C | A | A | A | C | A | C | A |
| | Fluidity (spiral flow) | | | mm | 420 | 433 | 396 | 422 | 407 | 413 | 403 | 411 |
| | | | | Determination | B | B | B | B | B | B | B | B |
| | Comprehensive determination | | | | C | G | C | C | G | C | C | C |

It is found that the thermoplastic resin compositions of Examples 1 to 16 give resin molded articles excellent in an adhesion strength characteristic, a thermal cycle characteristic, impact resistance, and fluidity in a coating step.

In the thermoplastic resin composition of Comparative Example 1, since only one kind of rubber-containing graft copolymer (A-I) was used as the rubber-containing graft copolymer, a thermal cycle characteristic and impact resistance were inferior.

In the thermoplastic resin composition of Comparative Example 2, since the amount of the rubber-containing graft copolymer (A-I) in the rubber-containing graft copolymer mixture (A) was less than 60% by mass, an adhesion strength characteristic during high-speed molding was inferior.

In the thermoplastic resin composition of Comparative Example 3, since the amount of the rubber-containing graft copolymer (A-I) in the rubber-containing graft copolymer mixture (A) was 95% by mass or more, a thermal cycle characteristic was inferior.

In the thermoplastic resin composition of Comparative Example 4, since only one kind of rubber-containing graft copolymer (A-II) was used as the rubber-containing graft copolymer, an adhesion strength characteristic during medium-speed molding and high-speed molding was inferior.

In the thermoplastic resin composition of Comparative Example 5, since in the rubber-containing graft copolymer (A-I), the mass average particle size of the rubbery polymer was smaller than 0.15 µm, impact resistance was inferior.

In the thermoplastic resin composition of Comparative Example 6, since in the rubber-containing graft copolymer (A-I), the proportion of particles having particle sizes of larger than 0.122 µm and 0.243 µm or smaller in the all particles of rubbery polymer was less than 50% by mass, an adhesion strength characteristic during high-speed molding was inferior.

In the thermoplastic resin composition of Comparative Example 7, since the rubber-containing graft copolymer mixture includes the rubber-containing graft copolymer (A-I), a thermal cycle characteristic was inferior.

In the thermoplastic resin composition of Comparative Example 8, since only the rubber-containing graft copolymer (A-II-3) obtained by copolymerizing a monomer mixture in presence of two kinds of rubbery polymers of which mass average particle sizes are different from each other was used, an adhesion strength characteristic during medium-speed molding and high-speed molding was inferior.

### Industrial Applicability

According to the present invention, it is possible to provide a thermoplastic resin composition for coating that can give a resin molded article excellent in an adhesion strength characteristic, a thermal cycle characteristic, impact resistance, and fluidity in a coating step, and a resin molded article and a coated article obtained by molding the thermoplastic resin composition. Accordingly, the present invention is very important in industry.

## Claims

1. A thermoplastic resin composition for coating, comprising:
a rubber-containing graft copolymer mixture (A) including two or more kinds of rubber-containing graft copolymers obtained by copolymerizing a monomer mixture containing an aromatic vinyl compound and a vinyl cyanide compound in presence of a diene rubbery polymer; and
a rigid copolymer (B) including a monomer unit derived from an aromatic vinyl compound and a monomer unit derived from a vinyl cyanide compound,
wherein the rubber-containing graft copolymer mixture (A) includes a rubber-containing graft copolymer (A-I) in which a mass average particle size of the diene rubbery polymer is 0.15 µm or larger and smaller than 0.25 µm and a proportion of particles having particle sizes of larger than 0.122 µm and 0.243 µm or smaller in all particles of the diene rubbery polymer is 50% by mass or more, and a rubber-containing graft copolymer (A-II) in which a mass average particle size of the diene rubbery polymer is 0.25 µm or larger and 0.5 µm or smaller,
an amount of the rubber-containing graft copolymer (A-I) is 60% by mass or more and less than 95% by mass, relative to a total mass of the rubber-containing graft copolymer mixture (A), and
when a total mass of the rubber-containing graft copolymer mixture (A) and the rigid copolymer (B) is set as 100 parts by mass, an amount of the rubber-containing graft copolymer mixture (A) is 25 parts by mass or more and 50 parts by mass or less, and an amount of the rigid copolymer (B) is 50 parts by mass or more and 75 parts by mass or less.

2. The thermoplastic resin composition for coating according to claim 1,
wherein the rigid copolymer (B) includes a rigid copolymer (B-I) in which a mass average molecular weight is 50,000 or more and 80,000 or less and an amount of the monomer unit derived from a vinyl cyanide compound is 30% by mass or more and 35% by mass or less, relative to a total mass of the rigid copolymer.

3. A resin molded article comprising the thermoplastic resin composition for coating according to claim 1 or 2.

4. A coated article comprising:
the resin molded article according to claim 3; and
a coating film formed on at least a part of a surface of the resin molded article.

## Patentansprüche

1. Thermoplastische Harzzusammensetzung zum Beschichten, umfassend:
ein gummihaltiges Pfropfcopolymer-Gemisch (A), das zwei oder mehrere Arten von gummihaltigen Pfropfcopolymeren beinhaltet, die durch Copolymerisieren eines Monomergemischs, das eine aromatische Vinylverbindung und eine Vinylcyanidverbindung enthält, in Anwesenheit eines gummiartigen Dienpolymers erlangt werden; und
ein starres Copolymer (B), das eine Monomereinheit, die von einer aromatischen Vinylverbindung abgeleitet ist, und eine Monomereinheit, die von einer Vinylcyanidverbindung abgeleitet ist, beinhaltet,
wobei das gummihaltige Pfropfcopolymer-Gemisch (A) ein gummihaltiges Pfropfcopolymer (A-1), in dem eine massengemittelte Teilchengröße des gummiartigen Dienpolymers 0,15 µm oder größer und kleiner als 0,25 µm ist und ein Anteil von Teilchen mit Teilchengrößen von größer als 0,122 µm und 0,243 µm oder kleiner in allen Teilchen des gummiartigen Dienpolymers 50 Massenprozent oder mehr ist, und ein gummihaltiges Pfropfcopolymer (A-II), in dem eine massengemittelte Teilchengröße des gummiartigen Dienpolymers 0,25 µm oder größer und 0,5 µm oder kleiner ist, beinhaltet,
eine Menge des gummihaltigen Pfropfcopolymers (A-1) 60 Massenprozent oder mehr und weniger als 95 Massenprozent ist, bezogen auf eine Gesamtmasse des gummihaltigen Pfropfcopolymer-Gemischs (A), und
wenn eine Gesamtmasse des gummihaltigen Pfropfcopolymer-Gemischs (A) und des starren Copolymers (B) als 100 Massenteile festgelegt ist, eine Menge des gummihaltigen Pfropfcopolymer-Gemischs (A) 25 Massenteile oder mehr und 50 Massenteile oder weniger ist und eine Menge des starren Copolymers (B) 50 Massenteile oder mehr und 75 Massenteile oder weniger ist.

2. Thermoplastische Harzzusammensetzung zum Beschichten nach Anspruch 1, wobei das starre Copolymer (B) ein starres Copolymer (B-1) beinhaltet, bei dem ein massegemitteltes Molekulargewicht 50.000 oder mehr und 80.000 oder weniger ist und eine Menge der von einer Vinylcyanidverbindung abgeleiteten Monomereinheit 30 Massenprozent oder mehr und 35 Massenprozent oder weniger ist, bezogen auf eine Gesamtmasse des starren Copolymers.

3. Harzformgegenstand, umfassend die thermoplastische Harzzusammensetzung zum Beschichten nach Anspruch 1 oder 2.

4. Beschichteter Gegenstand, umfassend:
den Harzformgegenstand nach Anspruch 3; und
einen Beschichtungsfilm, der auf mindestens einem Teil einer Oberfläche des Harzformgegenstands gebildet ist.

## Revendications

1. Composition de résine thermoplastique pour revêtement, comprenant :
un mélange de copolymères greffés contenant du caoutchouc (A) comportant au moins deux types de copolymères greffés contenant du caoutchouc obtenus par copolymérisation d'un mélange de monomères contenant un composé vinyle aromatique et un composé cyanure de vinyle en présence d'un polymère caoutchouteux de diène ; et
un copolymère rigide (B) comportant un motif monomère dérivé d'un composé vinyle aromatique et un motif monomère dérivé d'un composé cyanure de vinyle,
dans laquelle le mélange de copolymères greffés contenant du caoutchouc (A) comporte un copolymère greffé contenant du caoutchouc (A-I) dans lequel une taille moyenne de particule en masse du polymère caoutchouteux de diène est de 0,15 µm ou plus et de moins de 0,25 µm et une proportion de particules ayant des tailles de particule de plus de 0,122 µm et de 0,243 µm ou moins dans l'ensemble des particules du polymère caoutchouteux de diène est de 50 % en masse ou plus, et un copolymère greffé contenant du caoutchouc (A-II) dans lequel une taille moyenne de particule en masse du polymère caoutchouteux de diène est de 0,25 µm ou plus et 0,5 µm ou moins,
une quantité du copolymère greffé contenant du caoutchouc (A-I) est de 60 % en masse ou plus et de moins de 95 % en masse, par rapport à une masse totale du mélange de copolymères greffés contenant du caoutchouc (A), et
lorsqu'une masse totale du mélange de copolymères greffés contenant du caoutchouc (A) et du copolymère ride (B) est établie à 100 parties en masse, une quantité du mélange de copolymères greffés contenant du caoutchouc (A) est de 25 parties en masse ou plus et 50 parties en masse ou moins, et une quantité du copolymère rigide (B) est de 50 parties en masse ou plus et 75 parties en masse ou moins.

2. Composition de résine thermoplastique pour revêtement selon la revendication 1,
dans laquelle le copolymère rigide (B) comporte un copolymère rigide (B-I) dans lequel un poids moléculaire moyen en masse est de 50 000 ou plus et 80 000 ou moins et une quantité du motif monomère dérivé d'un composé cyanure de vinyle est de 30 % en masse ou plus et 35 % en masse ou moins, par rapport à une masse totale du copolymère rigide.

3. Article moulé en résine comprenant la composition thermoplastique pour revêtement selon la revendication 1 ou 2.

4. Article revêtu comprenant :
l'article moulé en résine selon la revendication 3 ; et
un film de revêtement formé sur au moins une partie d'une surface de l'article moulé en résine.
